# EUROPÄISCHE PATENTSCHRIFT

(11) **EP 3 376 552 B1**
(45) Veröffentlichungstag und Bekanntmachung des Hinweises auf die Patenterteilung: **04.03.2020**
(21) Anmeldenummer: 17160641.1
(22) Anmeldetag: 13.03.2017
(51) Int. Cl.: H01M 2/02, H01M 2/04, H01M 2/10, H01M 2/24, H01M 10/04, H01M 10/625, H01M 10/6567, H01M 10/623, H01M 10/6561

(54) **BATTERIEZELLE, BATTERIEMODUL DIESE ENTHALTEND, SOWIE DEREN VERWENDUNG**
BATTERY CELL, BATTERY MODULE CONTAINING THE SAME, AND THEIR USE
CELLULE DE BATTERIE, MODULE DE BATTERIE LA COMPRENANT ET SON UTILISATION

(43) Veröffentlichungstag der Anmeldung: 19.09.2018
(73) Patentinhaber: Robert Bosch GmbH, 70442 Stuttgart (DE); GS Yuasa International Ltd., Kisshoin, Minami-ku, Kyoto-shi, Kyoto 601-8520 (JP)
(72) Erfinder: Dittmer, Bernd, 71640 Ludwigsburg (DE); Bessler, Florian, 70193 Stuttgart (DE); Le Hen, Gael, 71636 Ludwigsburg (DE); Schmidt, Alexander, 78166 Donaueschingen (DE); Janbein, Taleb, 71069 Sindelfingen (DE); Gansemer, Michael, 74366 Kirchheim (DE); Woll, Christoph, 70839 Gerlingen (DE); Kurras, Mathias, 70839 Gerlingen (DE); Schneider, Thorsten, 73266 Bissingen/Teck (DE)
(74) Vertreter: Isarpatent

(56) Entgegenhaltungen:
- DE-A1-102011 076 919
- JP-A- 2012 138 214
- JP-A- 2015 099 723
- US-A1- 2006 091 856

## Beschreibung

Die vorliegende Erfindung betrifft ein Batteriemodul, sowie dessen Verwendung.

Die JP 2015 099723 A offenbart eine Batteriezelle umfassend mindestens eine erste Elektrode und mindestens eine zweite Elektrode, sowie einen zwischen der ersten Elektrode und der zweiten Elektrode positionierten Separator, und ein Batteriezellengehäuse, das eine erste Gehäusehälfte und eine zweite Gehäusehälfte umfasst, wobei die erste Gehäusehälfte elektrisch von der zweiten Gehäusehälfte isoliert ist und wobei die erste Elektrode mit der ersten Gehäusehälfte und die zweite Elektrode mit der zweiten Gehäusehälfte elektrisch kontaktiert ist. Die erste und die zweite Elektrode sind parallel zu einer Bodenoder einer Deckenfläche der Batteriezelle ausgerichtet, und die Bodenfläche und die Deckenfläche sind in einer sechseckigen Gestalt ausgeführt.

Die US 2006/091856 A1 offenbart ein Batteriemodul mit einem Batteriezellenstapel aufweisend eine Mehrzahl von Batteriezellen mit einem Batteriemodulgehäuse, welche Seitenwände, sowie eine Deckenfläche und eine Bodenfläche aufweist. Eine Kontaktierung der Batteriezellen erfolgt sowohl im Bereich der Bodenfläche, als auch im Bereich der Deckenfläche. Jede Batteriezelle wird von zumindest einem Luftkanal kontaktiert, der in dem Batteriezellenstapel eingefügt ist.

Die JP 2012 138214 A offenbart, dass ein Batteriemodul als Temperiermittel Luft oder ein Kältemittel einer Kraftfahrzeugklimaanlage nutzt.

Aus der DE 10 2011 076919 A1 ist es bekannt, zwei Batteriezellen in vertikaler Richtung übereinander anzuordnen und elektrisch zu kontaktieren.

### Stand der Technik

Prismatische Lithiumionenbatteriezellen mit einer rechteckigen Grundfläche sind beispielsweise aus Batteriepacks der Automobilindustrie bekannt und dort in unterschiedlichen Ausführungen vertreten. Weiterhin sind sogenannte Pouch-Zellen oder Coffee-Bag-Zellen bekannt, sowie unterschiedlichste Formen von Rundzellen. Eine Sonderform stellen sogenannte Nussschalen- oder Nutshell-Zellen dar, bei denen zwei voneinander elektrisch isolierte Gehäusehälften als Anode bzw. Kathode der Batteriezelle fungieren. Im Inneren des Zellgehäuses sind einzelne Lagen aus Anoden- und Kathodenfolien, Separator und Festkörperelektrolyt übereinander gestapelt (Stack). Eine Sonderform dieser Art von Batteriezelle sind beispielsweise sogenannte Knopfzellen. Eine Mehrzahl von Batteriezellen bildet beispielsweise ein Batteriemodul, das seinerseits in einer Mehrzahl ein Batteriepack ausbildet. Derartige Batteriepacks sind an unterschiedlichste Bauformen innerhalb eines zu bestückenden Fahrzeugs angepasst, beispielsweise an eine Mulde im Fahrzeug für ein Ersatzrad.

Diesbezüglich ist beispielsweise aus der DE 10 2012 018 339 B4 die Verwendung von prismatischen Batteriezellen mit einer sechseckigen Grundfläche bekannt. Weiterhin ist aus der DE 10 2011 076 919 A1 die Verwendung von sogenannten Nutshell-Batteriezellen bekannt. Weiterhin offenbart die DE 10 2007 063 194 A1 einen Zell verbund aus mehreren parallel oder seriell miteinander verschalteten Batterieeinzelzellen. Die Einzelzellen sind dabei nebeneinander in einer wabenförmigen Struktur angeordnet und scheinen eine hexagonale Struktur aufzuweisen.

Darüber hinaus ist aus der DE 10 2014 210 570 A1 eine Batterie mit einer Temperiervorrichtung und mehreren Batteriezellen bekannt. Die Temperiervorrichtung umfasst dabei eine Fluidleitung, auf deren Außenseite eine Isolationsschicht aufgebracht ist. Die Batteriezellen sind dabei auf der besagten Isolationsschicht angeordnet. Die Isolationsschicht selbst kann auch eine Struktur in Form von regelmäßigen Sechsecken aufweisen.

### Offenbarung der Erfindung

Erfindungsgemäß wird ein Batteriemodul nach Anspruch 1 sowie dessen Verwendung nach Anspruch 6 geschaffen.

### Vorteile der Erfindung

Eine Batteriezelle des erfindungsgemäßen Batteriemoduls umfasst mindestens eine Anode sowie mindestens eine Kathode und einen zwischen der mindestens einen Anode und der mindestens einen Kathode positionierten Separator. Weiterhin umfasst die Batteriezelle ein Batteriezellgehäuse, welches in eine erste Gehäusehälfte und eine zweite Gehäusehälfte gegliedert ist. Die erste Gehäusehälfte ist elektrisch von der zweiten Gehäusehälfte isoliert ausgeführt. Dabei ist die erste Gehäusehälfte mit der mindestens einen Anode der Batteriezelle kontaktiert und die zweite Gehäusehälfte mit der mindestens einen Kathode der Batteriezelle.

Auf diese Weise fungieren die erste und die zweite Gehäusehälfte der Batteriezelle als Batteriezellterminals oder Spannungsabgriffe der Batteriezelle.

Dabei sind die mindestens eine Anode und die mindestens eine Kathode parallel zu einer Boden- und einer Deckelfläche der Batteriezelle ausgerichtet. Weiterhin weist die Bodenfläche und die Deckelfläche der Batteriezelle einen sechseckigen Grundriss auf.

Der besondere Vorteil dieser Maßnahme besteht darin, dass aufgrund des sechseckigen Grundrisses der Batteriezelle eine Mehrzahl von Batteriezellen platzsparend ohne nennenswerte Zwischenräume zwischen den Batteriezellen zu einem Batteriemodul zusammengestellt werden kann. Das Batteriemodul kann auf einfache Weise in horizontaler Richtung in jede Richtung erweitert werden. Weiterhin ist von Vorteil, dass auf der Basis des sechseckigen Grundrisses der Batteriezelle in der Batteriezelle entstehende thermische Energie gut in Richtung von Seitenwänden der Batteriezelle abtransportiert werden kann und somit eine effektive Kühlung der Batteriezelle gewährleistet ist. Dieser Effekt wird weiter verstärkt durch die horizontale Ausrichtung der einzelnen Schichten, wie Anode, Kathode und Separator innerhalb der Batteriezelle. Insgesamt führt dies zu einer mehr als zwanzig Mal besseren Wärmeableitung innerhalb der Batteriezelle als bei vergleichbaren prismatischen Nutshell-Zellen mit viereckigem Grundriss.

Weitere vorteilhafte Ausführungsformen der vorliegenden Erfindung sind Gegenstand der Unteransprüche.

So ist es von Vorteil, dass die Batteriezellen des erfindungsgemäßen Batteriemoduls einen Grundriss in Form eines regelmäßigen Sechsecks aufweisen, da dies eine besonders platzsparende Anordnung einzelner Batteriezellen innerhalb des Batteriemoduls erlaubt.

Weiterhin ist es von Vorteil, wenn die Batteriezellen des erfindungsgemäßen Batteriemoduls eine Mehrzahl von Anoden und Kathoden umfassen, welche alternierend in einem Stapel angeordnet sind,
und zwischen denen sich jeweils ein Separator befindet. Auf diese Weise lassen sich Batteriezellen mit einer höheren Batteriezellspannung bereitstellen.

Der besondere Vorteil der Art der
Kontaktierung des erfindungsgemäßen Batteriemoduls besteht darin, dass beispielsweise eine Vielzahl von Nutshell-Batteriezellen elektrisch auf einfache Weise kontaktiert werden können.

Erfahrungsgemäß sind die Batteriezellen des Batteriemoduls in einer horizontalen Ebene so voneinander beabstandet angeordnet, dass zwischen Seitenwänden benachbarter Batteriezellen eine Durchströmungsmöglichkeit in Form eines geeigneten Kanals gebildet wird, durch den ein Temperiermittel geführt werden kann. Bei diesem kann es sich beispielsweise um Luft oder beispielsweise um ein Kältemittel einer Klimaanlage für Kraftfahrzeuge handeln. Der besondere Vorteil dieser Maßnahmen besteht darin, dass ohne Ausbildung separater Temperiermittelkanäle alleine durch eine geeignete Positionierung der Batteriezellen eine Führungsmöglichkeit für Temperiermittel geschaffen wird.

Dabei erfolgt die Führung des Temperiermittels in einer horizontalen Richtung, wodurch die im Batteriemodul enthaltenen Batteriezellen von einem Temperiermittel entlang der Seitenflächen umströmt werden.

Die erfindungsgemäße Batteriezelle bzw. das erfindungsgemäße Batteriemodul lassen sich in vorteilhafter Weise einsetzen in elektrischen Energiespeichern für mobile Anwendungen, insbesondere für Elektrofahrzeuge, Hybridfahrzeuge oder E-Bikes, in portablen Einrichtungen zur Datenverarbeitung und Telekommunikation, in elektrischen Handwerkzeugen und Küchenmaschinen, sowie in stationären Anlagen zur Speicherung insbesondere regenerativ gewonnener elektrischer Energie.

### Kurze Beschreibung der Zeichnungen

In der Zeichnung werden vorteilhafte Ausführungsformen der vorliegenden Erfindung dargestellt und in der nachfolgenden Figurenbeschreibung näher erläutert. Es zeigt:
- Figur 1: einen schematischen Querschnitt durch ein erfindungsgemäßes Batteriemodul enthaltend erfindungsgemäße Batteriezellen,
- Figur 2: einen schematischen Längsschnitt durch eine erfindungsgemäße Batteriezelle gemäß einer ersten Ausführungsform und
- Figur 3: einen schematischen Längsschnitt durch ein Batteriemodul gemäß einer zweiten Ausführungsform der vorliegenden Erfindung.

### Ausführungsformen der Erfindung

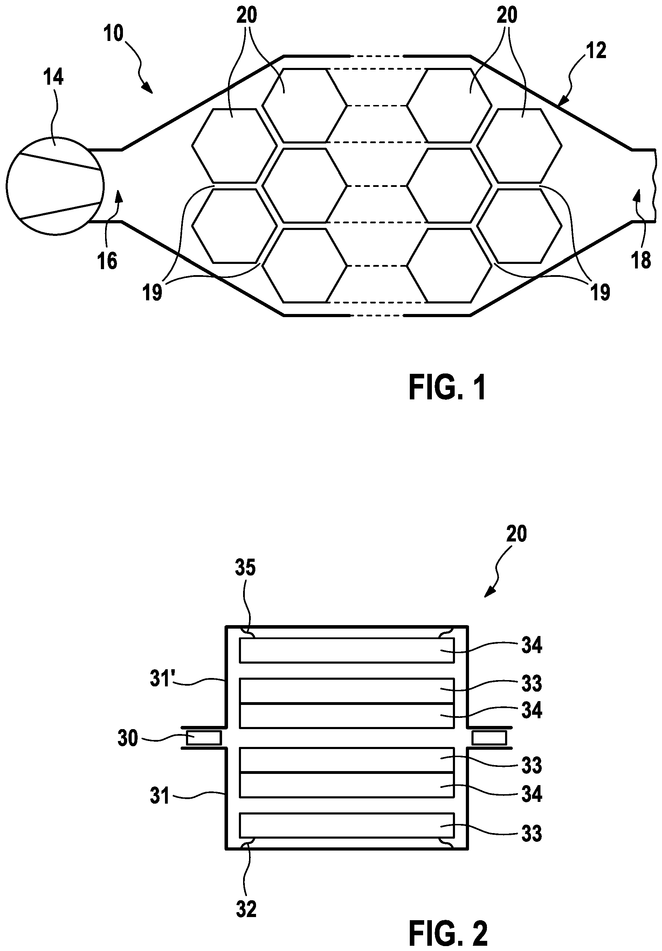

In Figur 1 ist ein erfindungsgemäßes Batteriemodul 10 schematisch dargestellt. Das Batteriemodul 10 umfasst eine Mehrzahl von Batteriezellen 20, die eine prismatische Form mit einem sechseckigen Grundriss aufweisen. Weiterhin weist das Batteriemodul 10 ein Batteriemodulgehäuse 12 auf, das eine an den Raumerfordernissen für einen entsprechenden Verbau des Batteriemoduls angepasste Form aufweist. Das Batteriemodul 10 kann eine entsprechende Vielzahl an Batteriezellen 20 enthalten, was durch gestrichelte Linien in Figur 1 symbolisiert ist. Weiterhin umfasst das Batteriemodul 10 eine Fördervorrichtung 14 für ein Temperiermittel. Bei dem Temperiermittel kann es sich beispielsweise um Luft oder auch um ein in Kraftfahrzeug-Klimaanlagen verwendetes Kältemittel handeln. Mit der Fördervorrichtung 14 wird beispielsweise ein Temperierfluid dem Inneren des Batteriemoduls 10 zugeführt.

Dabei tritt das Temperiermittel durch einen Temperiermitteleinlass 16 in das Innere des Batteriemoduls 10 bzw. des Batteriemodulgehäuses 12 ein, und verlässt das Innere des Batteriemoduls 10 über einen Temperiermittelauslass 18. Um eine ausreichend hohe Kühlleistung im Umfeld der Batteriezellen 20 zu erreichen, sind diese beispielsweise voneinander beabstandet innerhalb des Batteriemoduls 10 angeordnet, so dass zwischen den Seitenwänden der Batteriezellen 20 Zwischenräume entstehen, die als Temperiermittelkanäle 19 dienen. Je nach seitlichem Abstand der Batteriezellen 20 zueinander, lässt sich die Dimensionierung der Temperiermittelkanäle 19 entsprechend dem Temperierbedarf der Batteriezellen 20 anpassen.

In Figur 2 ist eine erfindungsgemäße Batteriezelle 20 im Detail in einem Längsschnitt dargestellt. Die erfindungsgemäße Batteriezelle 20 umfasst ein Batteriezellgehäuse, welches aus einer oberen Halbschale 31' und einer unteren Halbschale 31 gebildet ist. Die beiden Halbschalen 31, 31' sind beispielsweise aus einem elektrisch leitfähigen Material, beispielweise einem metallischen Material ausgeführt. Die beiden Gehäusehalbschalen 31, 31' dienen gleichzeitig als Batterieterminals oder Spannungsabgriffe der Batteriezelle 20.

Aus diesem Grund sind die obere Gehäusehalbschale 31' und die untere Gehäusehalbschale 31 durch eine elektrische Isolierung 30 voneinander getrennt. Darüber hinaus ist die untere Gehäusehalbschale 31 über eine Kontaktierung 32 mit einer ersten Elektrode 33 der Batteriezelle 20 verbunden. Die Batteriezelle 20 enthält neben mehreren ersten Elektroden 33 auch entsprechende Anzahl zweiter Elektroden 34. Diese bilden gemeinsam mit den ersten Elektroden 33 jeweils galvanische Elemente, die im Inneren der Batteriezelle 20 seriell miteinander verschaltet sind. Mindestens eine der zweiten Elektroden 34 ist über eine zweite Kontaktierung 35 mit der oberen Gehäusehalbschale 31' der Batteriezelle 20 elektrisch leitend verbunden.

Grundsätzlich ist es möglich, die Batteriezelle 20 lediglich mit einem galvanischen Element, umfassend eine erste und eine zweite Elektrode 33, 34, auszustatten. Bevorzugt werden jedoch zwei oder mehr galvanische Zellen jeweils umfassend eine erste Elektrode 33 und eine zweite Elektrode 34, vorgesehen. Dabei sind die einzelnen Elektroden 33, 34 in einer gestapelten Ausführung vorgesehen und beispielweise entsprechend dem sechseckigen Grundriss der Batteriezelle 20 ebenfalls sechseckig ausgeführt. Bei dem sechseckigen Grundriss der Batteriezelle 20 kann es sich um ein regelmäßiges Sechseck oder auch um ein asymmetrisches Sechseck handeln.

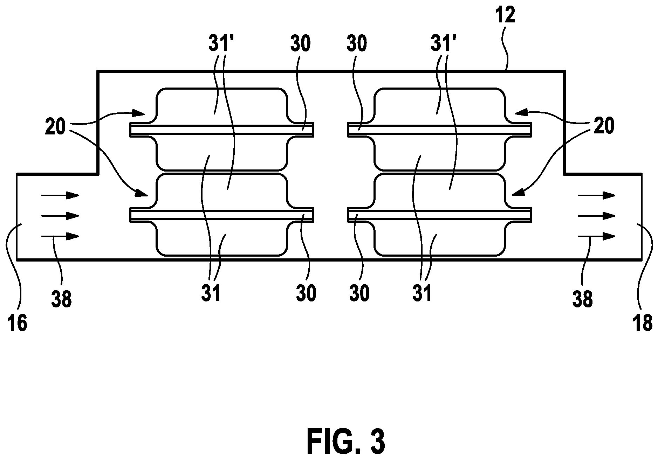

In Figur 3 ist ein Batteriemodul 10 gemäß einer zweiten Ausführungsform der vorliegenden Erfindung dargestellt. Es bezeichnen gleiche Bezugszeichen gleiche Bauteilkomponenten wie in den Figuren 1 und 2.

Im Unterschied zu dem in Figur 1 gezeigten Batteriemodul 10 umfasst das Batteriemodul 10 gemäß Figur 3 mindestens zwei in vertikaler Richtung übereinandergestapelte Batteriezellen 20. Diese werden wie bereits bei Figur 1 beschrieben, von einem Temperiermittel umströmt, dessen Strömungsrichtung in Figur 3 beispielsweise durch Pfeile 38 verdeutlicht ist. Grundsätzlich ist es möglich, auch eine Mehrzahl oder eine Vielzahl von Batteriezellen 20 in vertikaler Richtung aufeinanderzustapeln. Da die jeweiligen Gehäusehalbschalen 31', 31 gleichzeitig als Batteriezellterminals fungieren, sind die jeweils gestapelten Batteriezellen 20 auch elektrisch miteinander kontaktiert. Je nach Bauraumerfordernis, können die vertikalen Stapel aus Batteriezellen 20 eine unterschiedliche Höhe in unterschiedlichen Bereichen des Batteriemoduls 10 einnehmen.

## Patentansprüche

1. Batteriemodul (10) mit:
einer Mehrzahl von Batteriezellen (20), jeweils umfassend mindestens eine erste Elektrode (33) und mindestens eine zweite Elektrode (34), sowie einen zwischen der erste Elektrode (33) und der zweiten Elektrode (34) positionierten Separator, und ein Batteriezellgehäuse (12), das eine erste Gehäusehälfte (31) und eine zweite Gehäusehälfte (31') umfasst, wobei die erste Gehäusehälfte (31) elektrisch von der zweiten Gehäusehälfte (31') isoliert ist und wobei die erste Elektrode (33) mit der ersten Gehäusehälfte (31) und die zweite Elektrode (34) mit der zweiten Gehäusehälfte (31') elektrisch kontaktiert ist, wobei die erste Elektrode (33) und die zweite Elektrode (34) parallel zu einer Boden- oder einer Deckelfläche der Batteriezelle (20) ausgereichtet ist, und wobei die Bodenfläche und die Deckelfläche des Batteriezellgehäuses in Gestalt eines regelmäßigen Sechsecks ausgeführt sind, und
einem Batteriemodulgehäuse (12), welches Seitenwände sowie eine Deckelfläche und eine Bodenfläche aufweist, wobei eine Kontaktierung der Batteriezellen (20) sowohl im Bereich der Bodenfläche als auch im Bereich der Deckelfläche des Batteriemodulgehäuses (12) erfolgt,
wobei die Batteriezellen (20) in einer horizontalen Ebene so beabstandet zueinander angeordnet sind, dass zwischen den Seitenflächen benachbarter Batteriezellen (20) eine Durchströmungsmöglichkeit (19) in Form von Temperiermittelkanälen für ein Temperiermittel entsteht, wodurch die Batteriezellen von dem Temperiermittel entlang ihrer Seitenflächen umströmbar sind,
wobei das Batteriemodulgehäuse (12) einen Temperiermitteleinlass (16) und einen Temperiermittelauslass (18) aufweist und wobei das Batteriemodulgehäuse (12) von dem Temperiermittel in der horizontalen Ebene durchströmbar ist.

2. Batteriemodul nach Anspruch 1, wobei am Temperiermitteleinlass (16) eine Fördervorrichtung (14) vorgesehen ist, mit der das Temperiermittel dem Innern des Batteriemodulgehäuses (12) zuführbar ist.

3. Batteriemodul nach Anspruch 1 oder 2, **dadurch gekennzeichnet, dass** das Temperiermittel Luft oder ein Kältemittel einer Kraftfahrzeugklimaanlage ist.

4. Batteriemodul nach einem der Ansprüche 1 bis 3, **dadurch gekennzeichnet, dass** jeweils mindestens zwei Batteriezellen (20) nach einem der Ansprüche 1 bis 3 in vertikaler Richtung übereinander angeordnet und elektrisch miteinander kontaktiert sind.

5. Batteriemodul nach einem der Ansprüche 1 bis 4, **dadurch gekennzeichnet, dass** in den Batteriezellen (20) eine Mehrzahl von ersten Elektroden (33) und zweiten Elektroden (34) vorgesehen sind, wobei die ersten Elektroden (33) und die zweiten Elektroden (34) alternierend zueinander in Form eines Stapels vorgesehen sind und sich zwischen einer ersten Elektrode (33) und einer zweiten Elektrode (34) jeweils ein Separator befindet.

6. Verwendung eines Batteriemoduls nach einem der Ansprüche 1 bis 5 in elektrischen Energiespeichern für Elektrofahrzeuge, Hybridfahrzeuge, in portablen Vorrichtungen zur Datenverarbeitung oder Telekommunikation, in elektrischen Handwerker- oder Küchengeräten sowie in stationären Speichern zur Speicherung insbesondere regenerativ gewonnener elektrischer Energie.

## Claims

1. Battery module (10) having:
a plurality of battery cells (20), each comprising at least one first electrode (33) and at least one second electrode (34), and a separator are positioned between the first electrode (33) and the second electrode (34), and a battery cell housing (12), which comprises a first housing half (31) and a second housing half (31'),
wherein the first housing half (31) is electrically insulated from the second housing half (31') and wherein the first electrode (33) is electrically contact-connected to the first housing half (31) and the second electrode (34) is electrically contact-connected to the second housing half (31'), wherein the first electrode (33) and the second electrode (34) are aligned in parallel with a bottom face or a top face of the battery cell (20), and wherein the bottom face and the top face of the battery cell housing are embodied in the form of a regular hexagon, and
a battery module housing (12), which has side walls and a top face and a bottom face, wherein the battery cells (20) are contact-connected both in the region of the bottom face and in the region of the top face of the battery module housing (12),
wherein the battery cells (20) are arranged spaced apart from one another in a horizontal plane so that a throughflow option (19) in the form of temperature-control medium channels for a temperature-control medium is produced between the side faces of adjacent battery cells (20), as a result of which the temperature-control medium can flow along the side faces of the battery cells,
wherein the battery module housing (12) has a temperature-control medium inlet (16) and a temperature-control medium outlet (18) and wherein the temperature-control medium can flow through the battery module housing (12) in the horizontal plane.

2. Battery module according to Claim 1, wherein a conveying device (14) is provided at the temperature-control medium inlet (16), by way of which conveying device the temperature-control medium can be fed to the inside of the battery module housing (12).

3. Battery module according to Claim 1 or 2, **characterized in that** the temperature-control medium is air or a coolant of a motor vehicle air-conditioning system.

4. Battery module according to one of Claims 1 to 3, **characterized in that** in each case at least two battery cells (20) according to one of Claims 1 to 3 are arranged one above another in a vertical direction and are electrically contact-connected to one another.

5. Battery module according to one of Claims 1 to 4, **characterized in that** a plurality of first electrodes (33) and second electrodes (34) are provided in the battery cells (20), wherein the first electrodes (33) and the second electrodes (34) are provided alternately to one another in the form of a stack and a respective separator is located between a first electrode (33) and a second electrode (34).

6. Use of a battery module according to one of Claims 1 to 5 in electrical energy stores for electric vehicles, hybrid vehicles, in portable devices for data processing or telecommunication, in electric hand tools or kitchen appliances, and in stationary stores for storing in particular regeneratively produced electrical energy.

## Revendications

1. Module de batterie (10), comprenant :
une pluralité de cellules de batterie (20), comportant respectivement au moins une première électrode (33) et au moins une deuxième électrode (34), ainsi qu'un séparateur positionné entre la première électrode (33) et la deuxième électrode (34), et un boîtier de cellule de batterie (12) qui comporte une première moitié de boîtier (31) et une deuxième moitié de boîtier (31'),
la première moitié de boîtier (31) étant isolée électriquement de la deuxième moitié de boîtier (31') et la première électrode (33) étant mise en contact électrique avec la première moitié de boîtier (31) et la deuxième électrode (34) avec la deuxième moitié de boîtier (31'), la première électrode (33) et la deuxième électrode (34) étant orientées parallèlement à une surface de fond ou de couvercle de la cellule de batterie (20) et la surface de fond ou la surface de couvercle du boîtier de cellule de batterie étant réalisées sous la forme d'un hexagone régulier, et
un boîtier de module de batterie (12), lequel possède des parois latérales ainsi qu'une surface de fond et une surface de couvercle, une mise en contact des cellules de batterie (20) étant effectuée à la fois dans la zone de la surface de fond et aussi dans la zone de la surface de couvercle du boîtier de module de batterie (12),
les cellules de batterie (20) étant disposées espacées les unes des autres dans un plan horizontal de telle sorte qu'il se produit entre les surfaces latérales des cellules de batterie (20) voisines une possibilité de passage d'écoulement (19) sous la forme de canaux à fluide d'équilibrage de température, les cellules de batterie pouvant être contournées par l'écoulement du fluide d'équilibrage de température le long de leurs surfaces latérales,
le boîtier de module de batterie (12) possédant une entrée de fluide d'équilibrage de température (16) et une sortie de fluide d'équilibrage de température (18) et le boîtier de module de batterie (12) pouvant être traversé par l'écoulement du fluide d'équilibrage de température dans le plan horizontal.

2. Module de batterie selon la revendication 1, un dispositif de refoulement (14) se trouvant au niveau de l'entrée de fluide d'équilibrage de température (16), par lequel le fluide d'équilibrage de température peut être acheminé à l'intérieur du boîtier de module de batterie (12).

3. Module de batterie selon la revendication 1 ou 2, **caractérisé en ce que** le fluide d'équilibrage de température est de l'air ou un fluide frigorigène d'un système de climatisation de véhicule.

4. Module de batterie selon l'une des revendications 1 à 3, **caractérisé en ce qu'**au moins deux cellules de batterie (20) selon l'une des revendications 1 à 3 sont respectivement disposées l'une au-dessus de l'autre dans la direction verticale et sont mises en contact électrique l'une avec l'autre.

5. Module de batterie selon l'une des revendications 1 à 4, **caractérisé en ce qu'**une pluralité de premières électrodes (33) et de deuxièmes électrodes (34) se trouvent dans les cellules de batterie (20), les premières électrodes (33) et les deuxièmes électrodes (34) étant disposées en alternance les unes des autres sous la forme d'un empilement et un séparateur se trouve respectivement entre une première électrode (33) et une deuxième électrode (34).

6. Utilisation d'un module de batterie selon l'une des revendications 1 à 5 dans des accumulateurs d'énergie électrique pour des véhicules électriques, des véhicules hybrides, dans des dispositifs portables de traitement de données ou de télécommunication, dans des appareils électriques d'artisan ou de cuisine ainsi que dans des accumulateurs fixes destinés à accumuler de l'énergie électrique obtenue notamment par récupération.
